# FASCICULE DE BREVET EUROPEEN

(11) **EP 0 838 740 B1**
(45) Date de publication et mention de la délivrance du brevet: **12.12.2001**
(21) Numéro de dépôt: 97810778.7
(22) Date de dépôt: 20.10.1997
(51) Int. Cl.: G05B 19/042

(54) **Procédé de mise en correspondance d'un boîtier de commande de groupe avec un boîtier de commande et/ou un boîtier d'action et/ou un boîtier de mesure**
Verfahren zur Verbindung einer Gruppensteuerungsdose mit einer Steuerungsdose und/oder einer Antriebsdose und/oder einer Messdose
Method of relating a group control box with a control box and/or a actuation box and/or a measurement box

(30) Priorité: 25.10.1996 FR 9613052
(43) Date de publication de la demande: 29.04.1998
(73) Titulaire: SOMFY, F-74300 Cluses (FR)
(72) Inventeur: Motte, Emeric Henri Joseph, 74700 Sallanches (FR); Cheron, Eric, 74440 Taninges (FR); Pepin, Laurent Georges, 74130 Vougy (FR)
(74) Mandataire: Meylan, Robert Maurice

(56) Documents cités:
- EP-A- 0 466 152
- EP-A- 0 495 397
- EP-A- 0 574 636
- EP-A- 0 685 778
- FR-A- 2 670 590

## Description

L'invention concerne un procédé de mise en correspondance par un utilisateur d'un boîtier de commande de groupe avec au moins un boîtier de commande de groupe et/ou un boîtier d'action et/ou un boîtier de mesure dans un réseau domotique.

Des procédés de mise en correspondance d'un boîtier de commande avec des boîtier d'action dans des réseaux domotiques sont connus dans l'art antérieur.

Le brevet FR-A-2 670 590, par exemple, montre un procédé de mise en correspondance d'un boîtier de commande avec un boîtier d'action et d'attribution d'adresses dans un réseau domotique. Dans ce procédé, l'utilisateur commence par actionner un bouton poussoir spécial, dit bouton de mise en correspondance, sur un appareil de commande ce qui ouvre la session de mise en correspondance. L'utilisateur peut alors choisir sur cet appareil de commande une commande particulière, et une fois que ce choix est fait, tous les voyants d'appareils d'action se mettent à clignoter. L'utilisateur choisit alors l'un des appareils d'action par appui sur une commande locale de cet appareil d'action. Les voyants de tous les autres appareils d'action non sélectionnés cessent de clignoter tandis que celui de l'appareil choisi reste allumé de façon permanente. A ce moment, les voyants de tous les appareils de commande se mettent à clignoter et l'utilisateur peut construire un chaînage d'appareils de commande. La fin de la session de mise en correspondance de l'appareil de commande avec l'appareil d'action est réalisée par la mise en mémoire dans l'appareil de commande de l'adresse de l'appareil d'action.

L'inconvénient majeur de ce procédé est que l'utilisateur ne peut mettre en correspondance qu'un seul appareil d'action avec un appareil de commande. Pour pouvoir mettre en correspondance plusieurs appareils d'action avec un appareil de commande, l'utilisateur doit construire un chaînage d'appareils de commande dont chacun d'entre eux est déjà mis en correspondance avec un appareil d'action.

Le but de la présente invention est de proposer un procédé permettant de mettre en correspondance de manière simple un boîtier de commande avec un ou plusieurs . autres boîtiers, que ce soit d'autres boîtiers de commande de groupe ou des boîtiers d'action ou d'autre automatismes nécessitant une mise en correspondance associés à des dispositifs tels que des volets roulants ou des boîtier de mesure associés à des capteurs de mesure comme un anémomètre.

Le procédé selon l'invention comporte l'étape suivante comme première étape:
- ) action de l'utilisateur sur un boîtier de commande de groupe initial pour commencer la mise en correspondance.

Le procédé est caractérisé en ce qu'il comporte en outre les étapes suivantes:
- ) demande de signalisation dans le réseau de tous les boîtiers de commande de groupe et/ou d'action et/ou de mesure qui sont en correspondance avec le boîtier de commande de groupe initial par comparaison des adresses qu'ils ont mémorisées avec l'adresse du boîtier de commande de groupe initial,
- ) action de l'utilisateur sur l'un ou plusieurs des boîtiers de commande et/ou sur l'un ou plusieurs des boîtiers d'action et/ou sur l'un ou plusieurs des boîtiers de mesure du réseau pour le mettre en correspondance avec le boîtier de commande de groupe initial s'il n'est pas encore en correspondance avec ce boîtier de commande de groupe initial ou pour supprimer sa mise en correspondance avec le boîtier de commande de groupe initial s'il est en correspondance avec le boîtier de commande de groupe initial, et
- ) action de l'utilisateur sur le boîtier de commande de groupe initial pour terminer la mise en correspondance.

Selon une étape particulière qui est mise en oeuvre uniquement lors d'une première mise en correspondance, c'est-à-dire lors de la création d'un nouveau groupe de boîtiers sur le réseau, l'étape d'action par l'utilisateur sur un boîtier de commande de groupe initial pour commencer la mise en correspondance est suivie d'abord par une étape de recherche d'adresse libre pour le boîtier de commande de groupe initial, ce qui lui permet de choisir une adresse n'existant pas encore sur le réseau et de se l'attribuer. Ensuite, le procédé se poursuit normalement par l'étape de demande de signalisation de tous les boîtiers de commande de groupe et/ou d'action et/ou de mesure qui sont en correspondance avec le boîtier de commande de groupe initial.

En principe, compte tenu du fait que le procédé mis en oeuvre dans ce cas est la création d'un nouveau groupe avec une nouvelle adresse de groupe, aucun boîtier ne devrait signaler une mise en correspondance déjà existante. Toutefois cette étape permet un contrôle du réseau et des adresses utilisées.

L'utilisateur peut ensuite mettre en correspondance des boîtiers par une action sur les boîtiers respectifs afin de créer le nouveau groupe comme décrit ci-dessus.

Finalement, l'utilisateur termine par une action sur le boîtier de commande de groupe initial pour finir la session de mise en correspondance.

Avantageusement, lors des étapes de recherche, les voyants sur les boîtiers clignotent de manière à signaler à l'utilisateur que l'ensemble du réseau travaille de manière autonome et que l'utilisateur ne peut rien modifier. De la même manière, une fois que le réseau a fini son travail autonome, les voyants sont allumés ou éteints de manière continue pour signaler à l'utilisateur qu'il peut agir sur les boîtiers.

De plus, pour commencer une mise en correspondance, il peut être utile de prévoir une temporisation enclenchée par l'action de l'utilisateur sur un boîtier de commande groupe initial. Cette temporisation peut durer au moins 5 secondes, par exemple.

Lors de la mise en correspondance d'un boîtier de commande de groupe avec le boîtier de commande de groupe initial, l'adresse présente dans la mémoire du boîtier de commande de groupe mis en correspondance est remplacée par l'adresse propre du boîtier de commande de groupe initial. En effet, un boîtier de commande ne possède qu'une seule adresse en mémoire et lorsque plusieurs boîtiers de commande sont chaînés, ils deviennent des clones les uns des autres avec la même adresse. N'importe lequel d'entre eux peut ainsi commander le groupe défini.

En revanche, lors de la mise en correspondance d'un boîtier d'action ou d'un boîtier de mesure avec le boîtier de commande de groupe initial, les adresses non utilisées sur le réseau se trouvant dans la mémoire du boîtier d'action ou de mesure sont effacées et l'adresse du boîtier de commande de groupe initial est ajoutée dans la mémoire du boîtier d'action ou de mesure.

Il peut être avantageux de prévoir une action différente de l'utilisateur sur le boîtier de commande de groupe initial pour commencer la mise en correspondance si l'utilisateur veut modifier un groupe existant ou s'il souhaite créer un nouveau groupe. Par exemple, si l'utilisateur veut modifier un groupe existant, l'action est un appui sur un bouton de modification de mise en correspondance, et si l'utilisateur veut créer un nouveau groupe, l'action est un appui sur un bouton de création de mise en correspondance. Ainsi, l'étape de recherche d'adresse libre, qui n'est exécutée que lors de la création d'un nouveau groupe, n'est mise en oeuvre que lors de l'appui sur le bouton de création de mise en correspondance.

Le dispositif pour la mise en oeuvre du procédé selon l'invention comprend un réseau, au moins un boîtier de commande de groupe, au moins un boîtier d'action et/ou au moins un boîtier de mesure. Le réseau utilise comme support de transmission soit des courants porteurs, soit des câbles ou encore des moyens optiques, comme des fibres, ou des moyens radio-électriques. Les boîtiers comportent de manière générale au moins une entrée et une sortie, des mémoires RAM et ROM, un voyant, un bouton poussoir, une alimentation, un calculateur et éventuellement une horloge. Les boîtiers d'action qui permettent de commander des moteurs ou des actionneurs comportent en outre un élément de commutation pour effectuer cette commande et les boîtiers de mesure comportent quant à eux un système d'acquisition leur permettant de mettre en mémoire la ou les valeurs mesurées par le capteur qui leur est associé.

Le procédé selon l'invention sera mieux compris par la description d'un mode d'exécution et des figures qui s'y rapportent.

Les figures représentent, à titre d'exemple un mode d'exécution de l'invention.

La figure 1 est un organigramme du procédé selon l'invention.

La figure 2 est un organigramme du procédé selon l'invention lors de la création d'un nouveau groupe.

La figure 3 est un schéma bloc d'un dispositif permettant la mise en oeuvre du procédé.

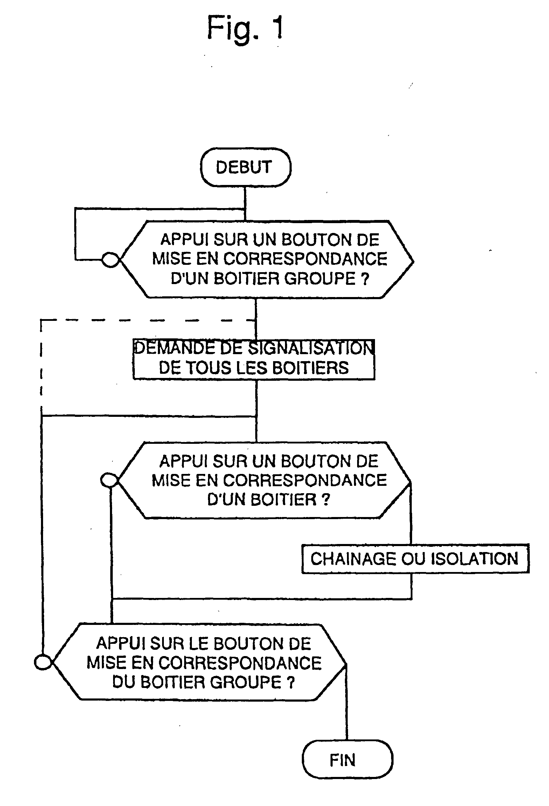

Le procédé est tout d'abord décrit en référence à la figure 1.

La session de mise en correspondance commence par une action de l'utilisateur sur un boîtier de commande de groupe initial pour débuter la mise en correspondance, à savoir l'appui sur un bouton de mise en correspondance. Dans le cas général du procédé de mise en correspondance, le boîtier de commande de groupe initial émet une demande de signalisation de tous les boîtiers du réseau, que ce soit des boîtiers de commande de groupe ou d'action ou encore de mesure, en correspondance avec lui et, à la fin de cette étape, ils se signalent à l'utilisateur, par exemple en allumant de manière continue un voyant.

Le procédé se poursuit par une action de l'utilisateur sur l'un ou plusieurs des boîtiers de commande et/ou sur l'un ou plusieurs des boîtiers d'action et/ou sur l'un ou plusieurs des boîtiers de mesure du réseau pour le mettre en correspondance avec le boîtier de commande de groupe initial s'il n'est pas encore en correspondance avec ce boîtier de commande de groupe initial ou pour supprimer sa mise en correspondance avec le boîtier de commande de groupe initial s'il est déjà en correspondance avec ce boîtier de commande de groupe initial. Cette étape se réalise par l'appui sur un bouton de mise en correspondance de chaque boîtier et résulte dans un chaînage du boîtier si celui-ci n'avait pas encore été mis en correspondance avec le boîtier de commande initial ou dans une isolation du boîtier si celui-ci était en correspondance avec le boîtier initial. L'appui sur un bouton de mise en correspondance du boîtier sélectionné produit la mémorisation de l'adresse du boîtier de commande de groupe initial dans la mémoire du boîtier sélectionné ce qui fait que ce dernier appartient au groupe ou actionne l'effacement de l'adresse du boîtier de commande de groupe initial de la mémoire du boîtier sélectionné ce qui a pour résultat que ce dernier n'appartient plus au groupe. Lors de cette étape, des appuis successifs sur le bouton de mise en correspondance d'un boîtier permettent de le chaîner avec le boîtier initial ou de l'isoler du boîtier initial. Au cours d'une session de mise en correspondance, l'utilisateur peut donc à tout moment modifier le chaînage ou l'isolation des boîtiers respectifs par cet appui sur leur bouton de mise en correspondance. Une fois que le boîtier choisi a été mis en correspondance avec le boîtier de commande de groupe initial, il le signale à l'utilisateur par exemple en allumant un voyant de manière continue. De manière similaire, lorsque la mise en correspondance d'un boîtier avec le boîtier de commande de groupe initial a été supprimée, le boîtier sorti du groupe le signale également à l'utilisateur, par exemple par un voyant éteint. De cette manière, il est très facile pour l'utilisateur de déterminer quels boîtiers appartiennent à quels groupes. Cette étape du procédé est en boucle de sorte que l'utilisateur peut modifier la configuration du groupe aussi souvent qu'il le désire, par une action sur les boîtiers du groupe.

Le procédé de mise en correspondance sort de cette boucle et se termine par une action de l'utilisateur sur le boîtier de commande groupe initial, par exemple l'appui sur le bouton de mise en correspondance du boîtier de commande de groupe initial. A ce moment, le boîtier de commande de groupe initial et tous les boîtiers sélectionnés du groupe signalent à l'utilisateur que la session de mise en correspondance est terminée, par exemple en éteignant leurs voyants respectifs.

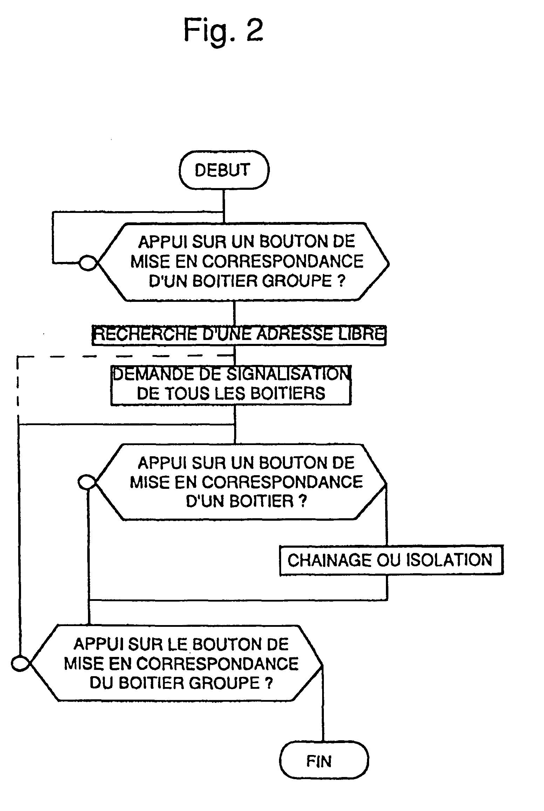

Le procédé permettant la création d'un nouveau groupe est décrit en référence à la figure 2.

La première étape est la même que celle du procédé selon la figure 1, à savoir une action de l'utilisateur sur un boîtier de commande de groupe initial pour débuter la mise en correspondance, par exemple sur un bouton poussoir lançant un mode création de groupe. La deuxième étape est une recherche par le boîtier de commande de groupe initial d'une adresse libre sur le réseau qui deviendra celle de son groupe. Une fois cette adresse trouvée, elle est mise en mémoire dans le boîtier de commande de groupe initial. L'étape suivante est une demande de signalisation sur le réseau des boîtiers déjà mis en correspondance comme dans le cas d'une mise en correspondance normale telle que décrite ci-dessus qui se termine par le signalement à l'utilisateur de ces boîtiers. Ensuite, comme dans le procédé décrit ci-dessus et représenté en figure 1, l'étape suivante permet à l'utilisateur de construire son groupe en agissant sur les boîtiers qu'il choisit et de les mettre en correspondance avec le boîtier de commande de groupe initial. De la même façon que précédemment, les boîtiers respectivement mis en correspondance le signalent à l'utilisateur par un voyant allumé de manière continue, par exemple. Pour terminer cette session de création de groupe, l'utilisateur agit sur le boîtier de commande de groupe initial, par exemple sur le bouton du mode création.

Comme décrit ci-dessus, le boîtier de commande de groupe initial et tous les boîtiers sélectionnés du groupe signalent alors à l'utilisateur que la session de mise en correspondance est terminée, par exemple en éteignant leur voyants respectifs.

Selon une variante du procédé représentée en traits tiretés dans les figures 1 et 2, l'étape de demande de signalisation de tous les boîtiers du réseau déjà mis en correspondance avec le boîtier de commande de groupe initial peut s'effectuer non pas seulement une fois au début de la session de mise en correspondance comme représenté dans les figures 1 et 2, mais en plus après chaque action de mise en correspondance ou suppression de mise en correspondance. Le retour de la boucle issue du bloc "APPUI SUR LE BOUTON DE MISE EN CORRESPONDANCE DU BOITIER GROUPE ?" qui termine la session ne se ferait plus en aval du bloc "DEMANDE DE SIGNALISATION DE TOUS LES BOITIERS" mais en amont de celui-ci.

Afin d'éviter des erreurs, le démarrage d'une session de mise en correspondance peut être lié à une temporisation, l'action de l'utilisateur sur le boîtier de commande de groupe initial devant durer un certain temps, par exemple un appui sur le bouton de mise en correspondance d'au moins cinq secondes.

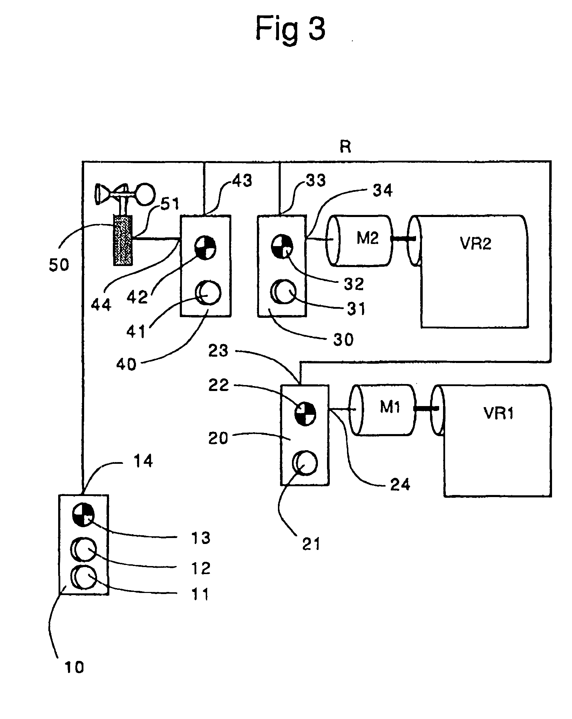

Un dispositif pour la mise en oeuvre du procédé est schématiquement représenté à la figure 3.

Ce dispositif comprend un réseau R, un boîtier de commande de groupe 10, ayant deux boutons de mise en correspondance 11, 12, l'un pour une mise en correspondance dans un groupe existant et l'autre pour le création d'un nouveau groupe, un voyant 13 et une entrée/sortie réseau 14. Le dispositif comprend en outre deux boîtiers d'action 20 et 30, comprenant chacun un bouton poussoir de mise en correspondance 21, 31, un voyant 22, 32, une entrée/sortie réseau 23, 33, et une entrée/sortie d'actionneur 24, 34. Ces entrées/sorties d'actionneur 24, 34 sont reliées à des moteurs M1 et M2 qui entraînent des volets roulants VR1 et VR2. Le dispositif comprend encore un boîtier de mesure 40, ayant un bouton poussoir de mise en correspondance 41, un voyant 42 une entrée/sortie réseau 43 et une entrée/sortie 44 reliée au capteur 50, dans ce cas un anémomètre.

Le boîtier de commande de groupe comporte une mémoire permettant de stocker une adresse de groupe. Les boîtiers d'action et de mesure comportent également une mémoire permettant de stocker plusieurs adresse de groupes, par exemple 15 adresses.

Le mode d'exécution décrit est donné à titre d'exemple et des variations sont possibles. Par exemple, lors de la mise en correspondance d'un boîtier d'action ou d'un boîtier de mesure avec un boîtier de commande de groupe initial, ce dernier pourrait effacer toutes les adresses n'existant plus sur le réseau et qui sont encore mémorisées dans le boîtier d'action ou de mesure mis en correspondance.

## Revendications

1. Procédé de mise en correspondance par un utilisateur d'un boîtier de commande de groupe (10) avec au moins un autre boîtier de commande de groupe et/ou un boîtier d'action (20,30) et/ou un boîtier de mesure (40) dans un réseau (R), comprenant l'étape suivante comme première étape:
- ) action sur un boîtier de commande de groupe initial (10) pour commencer la mise en correspondance, ledit procédé étant **caractérisé en ce qu'**il comporte en outre les étapes suivantes:
- ) demande de signalisation dans le réseau (R) de tous les boîtiers de commande de groupe (10) et/ou d'action (20,30) et/ou de mesure (40) qui sont en correspondance avec le boîtier de commande de groupe initial (10) par comparaison des adresses qu'ils ont mémorisées avec l'adresse du boîtier de commande de groupe initial,
- ) action sur l'un ou plusieurs des boîtiers de commande (10) et/ou sur l'un ou plusieurs des boîtiers d'action (20,30) et/ou sur l'un ou plusieurs des boîtiers de mesure (40) du réseau (R) pour le mettre en correspondance avec le boîtier de commande de groupe initial (10) s'il n'est pas encore en correspondance avec ce boîtier de commande de groupe initial (10) ou pour supprimer sa mise en correspondance avec le boîtier de commande de groupe initial (10) s'il est en correspondance avec le boîtier de commande de groupe initial (10), et
- ) action sur le boîtier de commande de groupe initial (10) pour terminer la mise en correspondance.

2. Procédé selon la revendication 1, **caractérisé en ce que**, lors de la création d'un nouveau groupe de boîtiers mis en correspondance, le procédé comprend l'étape suivante comme deuxième étape:
-) recherche dans le réseau (R) d'une adresse de groupe libre et mémorisation de cette adresse dans le boîtier de commande de groupe initial (10).

3. Procédé selon la revendication 1 ou 2, **caractérisé en ce que** les boîtiers (20,30,40) qui sont en correspondance avec le boîtier de commande de groupe initial (10) ou qui sont mis en correspondance avec ledit boîtier initial (10) se signalent à l'utilisateur par un voyant (22,32,42) allumé de manière continue.

4. Procédé selon l'une des revendications 1 à 3, **caractérisé en ce que** les boîtiers (20,30,40) qui ne sont pas en correspondance avec le boîtier de commande de groupe initial (10) ou dont la mise en correspondance avec ledit boîtier initial (10) est supprimée se signalent à l'utilisateur par un voyant (22,32,42) éteint de manière continue.

5. Procédé selon l'une des revendications 1 à 4, **caractérisé en ce que** pour commencer une mise en correspondance, l'action sur un boîtier de commande groupe initial (10) doit durer au moins 5 secondes.

6. Procédé selon l'une des revendications 1 à 5, **caractérisé en ce que** lors de la mise en correspondance d'un boîtier de commande de groupe avec le boîtier de commande de groupe initial (10), l'adresse présente dans la mémoire du boîtier de commande est remplacée par l'adresse propre du boîtier de commande de groupe initial (10).

7. Procédé selon l'une des revendications 1 à 6, **caractérisé en ce que** lors de la mise en correspondance d'un boîtier d'action (20,30) ou d'un boîtier de mesure (40) avec le boîtier de commande de groupe initial (10), les adresses non utilisées sur le réseau (R) se trouvant dans la mémoire du boîtier d'action (20,30) ou de mesure (40) sont effacées et l'adresse du boîtier de commande de groupe initial est ajoutée dans la mémoire du boîtier d'action (20,30) ou de mesure (40).

8. Procédé selon l'une des revendications 1 à 7, **caractérisé en ce que** l'action sur le boîtier de commande groupe initial (10) pour commencer la mise en correspondance est différente si l'utilisateur veut modifier un groupe existant ou créer un nouveau groupe.

9. Procédé selon la revendication 8, **caractérisé en ce que** si l'utilisateur veut modifier un groupe existant, l'action est un appui sur un bouton de modification de mise en correspondance (11), et si l'utilisateur veut créer un nouveau groupe, l'action est un appui sur un bouton de création de mise en correspondance (12).

10. Procédé selon l'une des revendications 1 à 9, **caractérisé en ce que** l'étape de demande de signalisation dans le réseau (R) de tous les boîtiers de commande de groupe et/ou d'action (20,30) et/ou de mesure (40) qui sont en correspondance avec le boîtier de commande de groupe initial (10) se produit en outre après chaque action sur un boîtier de commande ou sur un boîtier d'action (20,30) ou sur un boîtier de mesure (40) du réseau (R) pour le mettre en correspondance avec le boîtier de commande de groupe initial (10) ou pour supprimer sa mise en correspondance avec le boîtier de commande de groupe initial (10).

## Patentansprüche

1. Verfahren zum Verbinden einer Gruppensteuerungsdose (10) mit wenigstens einer anderen Gruppensteuerungsdose und/oder einer Antriebsdose (20, 30) und/oder einer Messdose (40) durch einen Benutzer in einem Netz (R), mit folgendem Schritt als erstem Schritt:
- Einwirken auf eine Anfangsdose zur Gruppensteuerung (10), um das Verbinden zu beginnen, wobei das erwähnte Verfahren **dadurch gekennzeichnet ist, dass** es ausserdem die folgenden Schritte umfasst:
- Abruf der Anzeige aller Gruppensteuerungsdosen (10) und/oder Antriebsdosen (20, 30) und/oder Messdosen (40) im Netz (R), welche mit der Anfangsdose zur Gruppensteuerung (10) in Verbindung stehen, durch Vergleich der Adressen, die sie gespeichert haben, mit der Adresse der Anfangsdose zur Gruppensteuerung,
- Einwirken auf eine oder mehrere Steuerungsdosen (10) und/oder eine oder mehrere Antriebsdosen (20, 30) und/oder eine oder mehrere Messdosen (40) des Netzes (R), um sie mit der Anfangsdose zur Gruppensteuerung (10) in Verbindung zu bringen, wenn sie noch nicht mit dieser Anfangsdose zur Gruppensteuerung (10) in Verbindung steht, oder um ihre Verbindung mit der Anfangsdose zur Gruppensteuerung (10) zu unterdrücken, wenn sie mit dieser Anfangsdose zur Gruppensteuerung (10) in Verbindung steht, und
- Einwirken auf die Anfangsdose zur Gruppensteuerung 10), um das Herstellen der Verbindung zu beenden.

2. Verfahren nach Anspruch 1, **dadurch gekennzeichnet, dass** während der Bildung einer neuen verbundenen Gruppe von Dosen das Verfahren den folgenden Schritt als zweiten Schritt umfasst:
- Suchen im Netz (R) nach einer freien Gruppenadresse und Speichern dieser Adresse in der Anfangsdose zur Gruppensteuerung (10).

3. Verfahren nach Anspruch 1 oder 2, **dadurch gekennzeichnet, dass** die Dosen (20, 30, 40), welche mit der Anfangsdose zur Gruppensteuerung (10) verbunden werden oder mit dieser verbunden worden sind, dem Benutzer durch eine ständig leuchtende Anzeige (22, 32, 42) gemeldet werden.

4. Verfahren nach einem der Ansprüche 1 bis 3, **dadurch gekennzeichnet, dass** die Dosen (20, 30, 40), welche nicht mit der Anfangsdose zur Gruppensteuerung (10) in Verbindung stehen oder deren Verbindung mit dieser Anfangsdose (10) unterdrückt ist, dem Benutzer durch eine ständig ausgeschaltete Anzeige gemeldet werden.

5. Verfahren nach einem der Ansprüche 1 bis 4, **dadurch gekennzeichnet, dass**, um die Herstellung einer Verbindung zu beginnen, das Einwirken auf eine Anfangsdose zur Gruppensteuerung (10) wenigstens 5 Sekunden dauert.

6. Verfahren nach einem der Ansprüche 1 bis 5, **dadurch gekennzeichnet, dass** bei der Herstellung einer Verbindung einer Gruppensteuerungsdose mit der Anfangsdose zur Gruppensteuerung (10) die im Speicher der Steuerungsdose vorhandene Adresse durch die eigene Adresse der Anfangdose zur Gruppensteuerung (10) ersetzt wird.

7. Verfahren nach einem der Ansprüche 1 bis 6, **dadurch gekennzeichnet, dass** beim Herstellen einer Verbindung einer Antriebsdose (20, 30) oder einer Messdose (40) mit der Anfangsdose zur Gruppensteuerung (10) die nicht im Netz (R) verwendeten Adressen, die sich im Speicher der Antriebsdose (20, 30) oder der Messdose (40) befinden, gelöscht werden und die Adresse der Anfangsdose zur Gruppensteuerung im Speicher der Antriebsdose (20, 30) oder der Messdose (40) hinzugefügt wird.

8. Verfahren nach einem der Ansprüche 1 bis 7, **dadurch gekennzeichnet, dass** das Einwirken auf die Anfangsdose zur Gruppensteuerung (10) zwecks Beginns der Herstellung einer Verbindung unterschiedlich ist, je nachdem ob der Benutzer eine bestehende Gruppe ändern oder eine neue Gruppe bilden will.

9. Verfahren nach Anspruch 8, **dadurch gekennzeichnet, dass**, wenn der Benutzer eine bestehende Gruppe ändern will, das Einwirken im Drücken eines Knopfes (11) zur Änderung der Verbindung besteht, und, wenn der Benutzer eine neue Gruppe bilden will, das Einwirken im Drücken eines Knopfes (12) zur Bildung der Verbindung besteht.

10. Verfahren nach einem der Ansprüche 1 bis 9, **dadurch gekennzeichnet, dass** der Schritt zum Abrufen der Anzeige aller Gruppensteuerungsdosen und/oder Antriebsdosen (20, 30) und/oder Messdosen (40) im Netz (R), welche mit der Anfangsdose zur Gruppensteuerung (10) in Verbindung stehen, ausserdem nach jedem Einwirken auf eine Steuerungsdose oder eine Antriebsdose (20, 30) oder eine Messdose (40) des Netzes (R) erfolgt, um sie mit der Anfangsdose zur Gruppensteuerung (10) zu verbinden oder um ihre Verbindung mit der Anfangsdose zur Gruppensteuerung (10) zu unterdrücken.

## Claims

1. A process for the hooking up by a user of a group control module (10) with at least one other group control module and/or an action module (20,30) and/or a measurement module (40) in a network (R), comprising the following step as the first step:
- ) action on an initial group control module (10) so as to commence the hooking up, said process being **characterized in that** it further comprises the following steps:
- ) request for signaling in the network (R) of all the group control (10) and/or action (20,30) and/or measurement (40) modules which are hooked up with the initial group control module (10) by comparing the addresses which they have stored with the address of the initial group control module,
- ) action on one or more of the control modules (10) and/or on one or more of the action modules (20,30) and/or on one or more of the measurement modules (40) of the network (R) to hook it up with the initial group control module (10) if it is not already hooked up with this initial group control module (10) or to cancel its hookup with the initial group control module (10) if it is hooked up with the initial group control module (10), and
- ) action on the initial group control module (10) to terminate the hookup.

2. A process as claimed in claim 1, **characterized in that**, during the creation of a new group of hooked up modules, the process comprises the following step as second step:
- ) search in the network (R) for a free group address and storage of this address in the initial group control module (10).

3. A process as claimed in claim 1 or 2, **characterized in that** the modules (20,30,40) which are hooked up with the initial group control module (10), or which become hooked up with the said initial module (10), signal themselves to the user via a continuously lit indicator light (22,32,42).

4. A process as claimed in one of claims 1 to 3, **characterized in that** the modules (20,30,40) which are not hooked up with the initial group control module (10), or whose hookup with the said initial module (10) is canceled, signal themselves to the user via an indicator light (22,32,42) which is permanently switched off.

5. A process as claimed in one of claims 1 to 4, **characterized in that** in order to commence a hooking up operation, the action on an initial group control module (10) must last at least 5 seconds.

6. A process as claimed in one of claims 1 to 5, **characterized in that** during the hooking up of a group control module with the initial group control module (10), the address present in the memory of the control module is replaced with the actual address of the initial group control module (10).

7. A process as claimed in one of claims 1 to 6, **characterized in that** during the hooking up of an action module (20,30) or of a measurement module (40) with the initial group control module (10), the unused addresses on the network (R) located in the memory of the action module (20,30) or measurement module (40) are erased and the address of the initial group control module is added to the memory of the action module (20,30) or measurement module (40).

8. A process as claimed in one of claims 1 to 7, **characterized in that** the action on the initial group control module (10) in order to commence hooking up is different if the user wants to modify an existing group or create a new group.

9. A process as claimed in claim 8, **characterized in that** if the user wants to modify an existing group, the action involves pressing a hookup modification button (11) and, if the user wants to create a new group, the action involves pressing a hookup creation button (12).

10. A process as claimed in one of claims 1 to 9, **characterized in that** the step involving a request for signaling in the network (R) of all the group control and/or action (20,30) and/or measurement (40) modules which are hooked up with the initial group control module (10) also occurs after each action on a control module or on an action module (20,30) or on a measurement module (40) of the network (R) to hook it up with the initial group control module (10) or to cancel its hookup with the initial group control module (10).
